(19) Europäisches Patentamt
European Patent Office
Office européen des brevets

(11) **EP 3 528 982 B1**

(12) **EUROPÄISCHE PATENTSCHRIFT**

(45) Veröffentlichungstag und Bekanntmachung des Hinweises auf die Patenterteilung:
**19.08.2020 Patentblatt 2020/34**

(21) Anmeldenummer: **17786897.3**

(22) Anmeldetag: **17.10.2017**

(51) Int Cl.:
**B22F 3/105** *(2006.01)*     **B29C 64/40** *(2017.01)*
**B33Y 40/00** *(2020.01)*     **B33Y 10/00** *(2015.01)*

(86) Internationale Anmeldenummer:
**PCT/EP2017/076492**

(87) Internationale Veröffentlichungsnummer:
**WO 2018/073259 (26.04.2018 Gazette 2018/17)**

(54) **VERFAHREN ZUR WERKZEUGLOSEN ENTFERNUNG VON STÜTZSTRUKTUREN BEI DER GENERATIVEN FERTIGUNG VON BAUTEILEN**

PROCESS FOR TOOL-FREE REMOVAL OF SUPPORT STRUCTURE FOR ADDITIVE MANUFACTURING OF COMPONENTS

PROCÉDÉ D'ÉLIMINATION SANS OUTIL DE STRUCTURE DE SUPPORT POUR PROCÉDÉ DE FABRICATION ADDITIVE DE PIÈCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2016 DE 102016220623**

(43) Veröffentlichungstag der Anmeldung:
**28.08.2019 Patentblatt 2019/35**

(73) Patentinhaber: **Fraunhofer-ges. zur Förderung der Angewandten Forschung E.V.**
**80686 München (DE)**

(72) Erfinder:
• **SCHMITHÜSEN, Tobias**
  **52066 Aachen (DE)**
• **EIBL, Florian**
  **52074 Aachen (DE)**
• **MEINERS, Wilhelm**
  **52074 Aachen (DE)**

(74) Vertreter: **Gagel, Roland**
**Patentanwaltskanzlei**
**Dr. Roland Gagel**
**Landsberger Strasse 480 a**
**81241 München (DE)**

(56) Entgegenhaltungen:
**EP-A1- 2 910 362     WO-A1-2017/029276**
**WO-A1-2017/143005     WO-A1-2017/143013**
**US-A1- 2015 197 862**

• **Christopher S Lefky ET AL: "DISSOLVABLE METAL SUPPORTS FOR PRINTED METAL PARTS", , 10. August 2016 (2016-08-10), Seiten 1604-1610, XP055438676, Gefunden im Internet: URL:https://sffsymposium.engr.utexas.edu/s ites/default/files/2016/129-Lefky.pdf [gefunden am 2018-01-08]**
• **OWEN J. HILDRETH ET AL: "Dissolvable Metal Supports for 3D Direct Metal Printing", 3D PRINTING AND ADDITIVE MANUFACTURING, Bd. 3, Nr. 2, 20. Juni 2016 (2016-06-20), Seiten 90-97, XP055438582, ISSN: 2329-7662, DOI: 10.1089/3dp.2016.0013**

EP 3 528 982 B1

## Beschreibung

### Technisches Anwendungsgebiet

Die vorliegende Erfindung betrifft ein Verfahren zur werkzeuglosen Entfernung von Stützstrukturen bei der generativen Fertigung eines oder mehrerer Bauteile mittels selektivem Laser-Schmelzen oder Laser-Sintern, bei dem die Bauteile zusammen mit Stützstrukturen zur Stützung von Bereichen der Bauteile schichtweise aufgebaut und die Stützstrukturen nach einem vollständigen Aufbau der Bauteile von den Bauteilen entfernt werden, wobei die Stützstrukturen derart aufgebaut werden, dass sie an einem Übergang zu den Bauteilen Soll-Trennstellen aufweisen.

Bei generativen Fertigungsverfahren werden Bauteile schichtweise direkt aus 3D-CAD-Modellen gefertigt. Beispiele für generative Fertigungsverfahren sind die Stereolithographie, das so genannte Fused Deposition Modelling, selektives Laser-Schmelzen oder selektives Laser-Sintern. Bei pulverbettbasierten Strahlschmelzverfahren wie zum Beispiel dem Laserstrahlschmelzen (LBM: Laser Beam Melting) werden die dreidimensionalen Bauteile durch einen sich wiederholenden Prozess aus schichtweisem Auftragen einer dünnen Pulverschicht mit einer Dicke von weniger als 200μm und anschließendem selektiven Aufschmelzen bestimmter Bereiche dieser Pulverschicht durch Laserstrahlung entsprechend den Geometrieinformationen des 3D-CAD-Modells schichtweise aufgebaut. Dadurch können dreidimensionale Bauteile von nahezu unbegrenzter Komplexität erzeugt werden. Als Grundlage pulverbettbasierter Strahlschmelzverfahren dient eine Bauplattform, auf der die Pulverschichten nacheinander aufgebracht werden. Die Laserstrahlung wird beispielsweise mit Hilfe von Galvanometerscannern über die jeweils aufgetragenen Schichten geführt.

### Stand der Technik

Ein Verfahren zum selektiven Laser-Schmelzen hochschmelzender metallischer Werkstoffpulver ist beispielsweise aus der DE 196 49 865 C1 bekannt. Bei diesem Verfahren wird das Bauteil schichtweise durch wiederholtes Aufbringen einer Schicht aus Werkstoffpulver und vollständiges Aufschmelzen der Schicht mit einem Laserstrahl auf einer Substratplatte aufgebaut. Dabei treten jedoch innerhalb des Bauteiles während des Aufbaus erhebliche Kräfte auf, die bei überhängenden Geometrien zu einem verstärkten Verzug des Bauteils führen können. Verfahrensbedingt müssen daher während des Bauprozesses zusätzlich Stützstrukturen aufgebaut werden, um zum einen thermisch-induzierten Spannungen entgegenzuwirken und somit Verzüge des Bauteils zu verhindern und zum anderen die Überbaubarkeit von Überhangflächen zu gewährleisten. Diese Stützstrukturen müssen im Anschluss an die Fertigung nach dem vollständigen Aufbau der Bauteile wieder entfernt werden.

Bisher erfolgt die Entfernung dieser Stützstrukturen in der Regel in einem manuellen Bearbeitungsschritt, beispielsweise mittels einfacher Handgeräte wie Hammer und Meißel oder Zangen.

Die EP 0 655 317 A1 zeigt ein Verfahren, bei dem zwischen den Stützstrukturen und den Bauteilen eine Schnittstelle erzeugt wird, die Strukturen mit reduziertem Querschnitt aufweist, um die Anbindung zwischen den Stützstrukturen und den Bauteilen zu verringern. Damit können die Stützstrukturen anschließend leichter und an definierter Stelle mechanisch vom Bauteil abgetrennt werden.

Durch die manuelle Bearbeitung zur Entfernung der Stützstrukturen ist der Endbearbeitungsprozess bei der generativen Fertigung der Bauteile jedoch sehr zeit- und kostenintensiv und somit für die Serienfertigung nicht wirtschaftlich. Des Weiteren können durch die in der Regel werkzeuggebundene Bearbeitung schwer zugängliche Stützstrukturen wie beispielsweise zur Stützung von Kühlkanälen nicht oder nur mit erheblichem Aufwand entfernt werden.

US 2015/197862 A1 bezieht sich auf ein Verfahren zur werkzeuglosen Entfernung von Stützstrukturen bei der generativen Fertigung eines oder mehrerer Bauteile, wobei stabförmige Stützstrukturen zum Stützen des herzustellenden Bauteils Soll-Trennstellen an einem Übergang zu dem Bauteil aufweisen, und wobei die genannten Stützstrukturen nach der Fertigung des Bauteils durch chemisches oder elektrochemisches Auflösen von den Bauteilen abgetrennt werden.

Die Aufgabe der vorliegenden Erfindung besteht darin, ein Verfahren zur Entfernung von Stützstrukturen bei der generativen Fertigung von Bauteilen anzugeben, dass eine werkzeuglose und automatisierbare Entfernung der Stützstrukturen ermöglicht.

### Darstellung der Erfindung

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie den Ausführungsbeispielen entnehmen.

Bei dem vorgeschlagenen Verfahren werden ein oder mehrere Bauteile zusammen mit Stützstrukturen zur Stützung von Bereichen der Bauteile schichtweise aufgebaut. Dies erfolgt mit einem pulverbettbasierten Strahlschmelzverfahren wie beispielsweise dem Laserstrahlschmelzen oder Laser-Sintern, bei dem das oder die Bauteile schichtweise durch wiederholtes Aufbringen einer Schicht aus vorzugsweise metallischem Werkstoffpulver und Aufschmelzen der Schicht mit einem Laserstrahl auf einer Substratplatte oder Bauplattform aufgebaut werden. Die Stützstrukturen werden dabei derart aufgebaut, dass sie an einem Übergang zu den Bauteilen Soll-Trennstellen aufweisen. Diese Soll-Trennstellen werden so ausgebildet, dass sie eine durch chemische oder elektrochemische Reaktion, insbesondere durch chemisches oder elektrochemisches Ätzen, gegenüber allen Bauteilkomponenten und vorzugsweise auch anderen Teilen der Stützstrukturen schneller auflösbare Struktur aufweisen. Die Stützstrukturen werden dann bei dem vorgeschlagenen Verfahren nach dem vollständigen Aufbau des Bauteils oder der Bauteile durch chemisches oder elektrochemisches Auflösen der Struktur an den Soll-Trennstellen von den Bauteilen abgetrennt. Es handelt sich dabei somit um den Prozess des chemischen oder elektrochemischen Abtragens. Die Soll-Trennstellen weisen dabei eine Ausdehnung auf, die einen ausreichenden Zugang eines für das chemische oder elektrochemische Abtragen der Struktur eingesetzten Mittels, beispielsweise eines Ätzmittels, ermöglicht.

Bei dem vorgeschlagenen Verfahren werden die Stützstrukturen nach dem vollständigen Aufbau der Bauteile zumindest lokal an den Soll-Trennstellen chemisch oder elektrochemisch aufgelöst und somit das Bauteil von den Stützstrukturen getrennt. Je nach Ausgestaltung der Stützstrukturen können diese auch an anderen Stellen oder vollständig chemisch oder elektrochemisch aufgelöst werden. Das Auflösen erfolgt vorzugsweise durch chemisches oder elektrochemisches Ätzen, indem das Bauteil oder die Bauteile mit den Stützstrukturen in ein entsprechendes Ätzmittel eingetaucht werden. In der bevorzugten Ausgestaltung wird keine Vorbehandlung der Oberfläche der Stützstrukturen zur Erhöhung Sensivität der Oberfläche für den Ätzprozess durchgeführt.

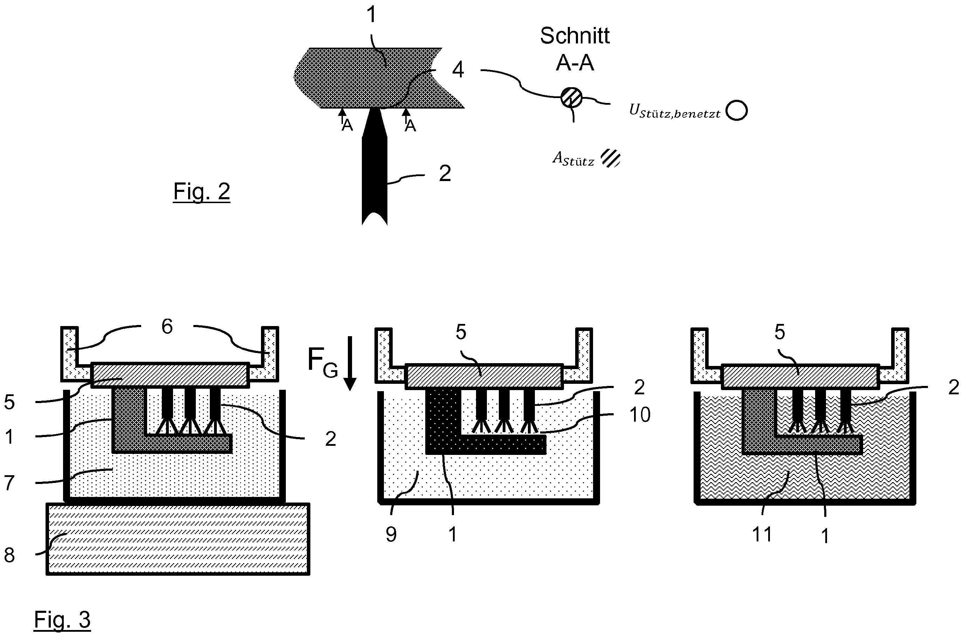

Die Soll-Trennstellen werden mit einer Struktur ausgebildet, deren Verhältnis zwischen dem mit Ätzmittel benetzbarem Umfang $U_{Stütz, benetzt}$ und der zugehörigen, d.h. dem Umfang zugrundeliegenden, Querschnittsfläche $A_{Stütz}$ (vgl. Fig. 2) an jeder Soll-Trennstelle größer ist, als das größte Verhältnis zwischen dem mit Ätzmittel benetzbarem Umfang $U_{Bauteil, benetzt}$ und der zugehörigen Querschnittsfläche $A_{Bauteil}$ an jeder Bauteilkomponente. Damit wird erreicht, dass die Soll-Trennstellen schneller aufgelöst bzw. geätzt werden als andere Stellen des oder der Bauteile sowie der Stützstrukturen. Diese Regel ist in der nachfolgenden Formel festgehalten:

$$\frac{U_{Stütz,benetzt}}{A_{Stütz}} > \frac{U_{Bauteil,benetzt}}{A_{Bauteil}}$$

Eine derartige Stützstruktur wird dadurch erfindungsgemäß erreicht, dass die Stützstrukturen sich beim Übergang zum Bauteil baumartig verzweigen. Das Verhältnis zwischen dem mit Ätzmittel benetzten Umfang $U_{Stütz,benetzt}$ und der zugehörigen Querschnittsfläche $A_{Stütz}$ bei konstantem Querschnitt nimmt dabei, bspw. linear, mit der Anzahl der Äste zu.

Zur Gewährleistung der Formgenauigkeit kann das jeweilige Bauteil auch mit einem definierten Aufmaß versehen bzw. aufgebaut werden. Dieses Aufmaß wird so gewählt, dass das oder die Bauteile nach dem chemischen oder elektrochemischen Auflösen der Struktur an den Soll-Trennstellen die gewünschten Maße aufweist. Hierbei wird berücksichtigt, dass durch das verwendete Mittel zum chemischen oder elektrochemischen Auflösen der Struktur an den Soll-Trennstellen auch Bereiche des Bauteils aufgelöst bzw. weggeätzt werden.

Die Stützstrukturen werden bei der generativen Fertigung der Bauteile beispielsweise unterhalb von Bauteil-Überhängen aufgebaut. Sie können auch auf einer Substratplatte für den Aufbau der Bauteile und/oder zwischen einzelnen Bereichen der Bauteile aufgebaut werden. Die Anordnung der einzelnen Stützstrukturen wird in der Regel anhand eines nicht zu unterschreitenden Überhangwinkels gewählt und derart dimensioniert, dass es an keiner Stelle zum Abreißen der Stützstruktur vom Bauteil kommt. Hierbei kann auch das gesamte Bauteil auf Stützstrukturen aufgebaut werden, so dass es keinen direkten Kontakt zur Substratplatte bzw. Bauplattform hat. Dies ermöglicht die einfache Entfernung der Substratplatte (mit den Stützelementen) vom fertiggestellten Bauteil.

Das vorgeschlagene Verfahren ermöglicht die automatisierte werkzeuglose Entfernung von Stützstrukturen generativ gefertigter Bauteile. Da die Entfernung insbesondere keine formstabilen Werkzeuge erfordert, können auch innenliegende Stützstrukturen problemlos entfernt werden. Durch die werkzeuglose Bearbeitung können die Bauteile einerseits parallelisiert und andererseits beispielsweise durch die Verwendung von Förderbändern zwischen einzelnen Becken mit den verwendeten Ätzmitteln, vollkommen automatisiert bearbeitet werden. Das Verfahren eignet sich für pulverbettbasierte additive Fertigungsverfahren und ermöglicht die industrielle Serienfertigung, die Möglichkeit einer kontinuierlichen Fertigung sowie die Reduktion von Nebenzeiten innerhalb des Fertigungsprozesses. Mit dem Verfahren werden die Endbearbeitungszeit und die damit verbundenen Kosten durch die Möglichkeit der gleichzeitigen automatisierten Bearbeitung von nahezu beliebig komplexen Bauteilen drastisch gesenkt. Durch die werkzeuglose Bearbeitung können nicht nur Stützstrukturen an beliebig komplex geformten äußeren Oberflächen definiert entfernt werden, sondern auch in schwer zugänglichen innenliegenden Strukturen wie beispielsweise Kühlkanälen. Durch das vorgeschlagene Verfahren können gleichzeitig geometrisch unterschiedliche Bauteile endbearbeitet werden, ohne dass die Endbearbeitungsanlage umgerüstet werden muss. Durch die Anwendung des vorgeschlagenen Verfahrens kann nachweislich auch die Oberflächenrauheit des gesamten Bauteils durch lokalen Abtrag der Rauheitsspitzen gesenkt werden. Die Bearbeitungsdauer gemäß dem vorgeschlagenen Verfahren korreliert nicht mit der Komplexität des Bauteils. Durch die werkzeuglose Bearbeitung erfährt das zu bearbeitende Bauteil keinerlei mechanische Einwirkung, so dass eine versehentliche Beschädigung der Oberfläche des Bauteils durch ein Werkzeug ausgeschlossen werden kann. Die Entfernung der Stützstrukturen kann mit dem vorgeschlagenen Verfahren bereits innerhalb weniger Minuten erfolgen.

Das Verfahren lässt sich vor allem für die Endbearbeitung von Bauteilen einsetzen, die mittels pulverbettbasierter additiver Fertigung, beispielsweise mit einem selektiven Laserstrahlschmelzverfahren, hergestellt werden. Das Verfahren ist nicht auf die Anzahl der geometrischen Komplexität der Bauteile, den verwendeten Pulverwerkstoff und ein bestimmtes Ätzmittel beschränkt.

**Kurze Beschreibung der Zeichnungen**

Das vorgeschlagene Verfahren wird nachfolgend anhand eines Ausführungsbeispiels in Verbindung mit den Zeichnungen nochmals näher erläutert. Hierbei zeigen:

Fig. 1    eine schematische Darstellung eines auf einer Bauplattform mit einem generativen Fertigungsverfahren aufgebauten Bauteils mit Stützstrukturen;

Fig. 2    eine schematische Darstellung einer beispielhaften Soll-Trennstelle sowie den zugehörigen benetzbaren Umfang und die Querschnittsfläche; und

Fig. 3    ein Beispiel für den Prozessablauf bei der Entfernung der Stützstrukturen vom Bauteil.

**Wege zur Ausführung der Erfindung**

Im Folgenden wird das vorgeschlagene Verfahren anhand der Fertigung eines Bauteils mit einem pulverbettbasierten generativen Fertigungsverfahren beschrieben. Bei diesem Fertigungsverfahren werden zur Vermeidung von Verzügen und zur Gewährleistung der Überbaubarkeit gleichzeitig mit dem Bauteil Stützstrukturen aufgebaut. Diese Stützstrukturen müssen im Anschluss an den generativen Fertigungsprozess, beispielsweise einem Laserstrahlschmelz-Prozess, in einer Endbearbeitung wieder vom Bauteil entfernt werden.

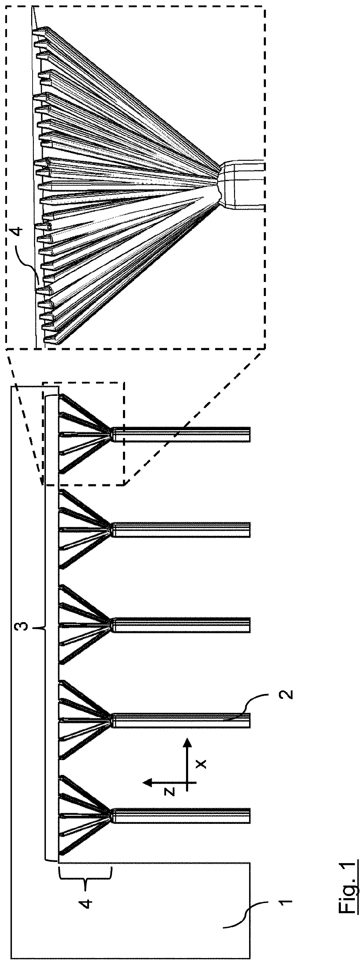

Figur 1 zeigt hierzu beispielhaft ein vollständig aufgebautes Bauteil 1, das einen Überhangbereich 3 aufweist, der mit einer Stützstruktur 2 gestützt wird. Die Stützstruktur 2 wurde dabei zusammen mit dem Bauteil 1 im generativen Fertigungsprozess schichtweise aufgebaut. Die Stützstruktur 2 ist so gestaltet, dass sie am Übergang zum Überhangbereich 3 des Bauteils 1 Soll-Trennstellen 4 aufweist. Diese Soll-Trennstellen weisen eine Struktur auf, deren Verhältnis von benetzbarem Umfang zur zugehörigen Querschnittsfläche größer ist als dasselbe Verhältnis an sämtlichen sonstigen Stellen des Bauteils 1 und der Stützstruktur 2.

Im Beispiel der Figur 1 werden als Stützstrukturen fünf baumartige Stützelemente verwendet, die sich im Bereich der Soll-Trennstellen 4 baumartig verzweigen. Die einzelnen Äste weisen dabei ein wesentlich größeres Verhältnis von benetzbarem Umfang zu zugehöriger Querschnittsfläche als der darunter liegende stammartige Bereich des jeweiligen Stützelementes und des gesamten Bauteils auf. Diese Äste könnten bereits als Soll-Trennstellen dienen. Im vorliegenden Beispiel verjüngen sich diese Äste jedoch beim Übergang zum Bauteil 1 zusätzlich, wodurch erst hier die Soll-Trennstellen 4 gebildet werden. Das Verhältnis von benetzbarem Umfang zu zugehöriger Querschnittsfläche an diesen Soll-Trennstellen 4 ist wesentlich größer als an jedem Astelement, wodurch das Auftrennen der formschlüssigen Verbindung zwischen Bauteil und Stützstruktur gezielt an dieser Stelle erreicht werden kann. Des Weiteren ermöglicht dies eine schnelle Auflösung der Struktur an den Soll-Trennstellen 4 mittels eines Ätzmittels, ohne hierdurch größere Bereiche des Bauteils 1 ebenfalls zu entfernen. Gegebenenfalls kann das Bauteil 1 auch mit einem definierten Aufmaß versehen werden, damit nach dem Ätzvorgang die ursprünglich gewünschte Dimension des Bauteils 1 erhalten wird.

Figur 2 zeigt eine beispielhafte Darstellung einer Soll-Trennstelle 4 einer Stützstruktur 2 wie die der Figur 1 an einem Bauteil 1. Das Verhältnis zwischen dem mit Ätzmittel benetzbarem Umfang $U_{Stütz,benetzt}$ und der zugehörigen Querschnittsfläche $A_{Stütz}$ an der Soll-Trennstelle 4 ist größer als das größte Verhältnis zwischen dem mit Ätzmittel benetzbarem Umfang und der zugehörigen Querschnittsfläche an jeder Bauteilkomponente.

Zur Anwendung des vorgeschlagenen Verfahrens kann ein einfaches ätzmittelresistentes beheizbares Becken 7 eingesetzt werden, in dem sich das Ätzmittel befindet. Bei Verwendung eines Werkstoffpulvers aus z. B. AlSi10Mg für den Aufbau der Bauteile kann beispielsweise Natronlauge (NaOH) als Ätzmittel verwendet werden. Dies ist in Figur 3 schematisch dargestellt, die drei Schritte zur Entfernung der Stützstrukturen zeigt. Beim ersten Schritt (linke Teilabbildung) wird das sich auf der Bauplattform 5 befindliche Bauteil 1 mit den Stützstrukturen 2 mittels einer Haltevorrichtung 6 in das Becken 7 eingetaucht oder als bereits von der Bauplattform 5 getrenntes Bauteil 1 mit Stützstrukturen 2 gänzlich in das Becken 7 mit dem Ätzmittel eingelegt. Das Ätzmittel ätzt dabei die Stützstrukturen 2 an den Soll-Trennstellen 4 aufgrund des großen Verhältnisses von benetztem Umfang zu zugehöriger Querschnittsfläche schnell weg. Der Ätzprozess kann auch durch Erhöhung der Temperatur des Ätzmittels auf beispielsweise 80°C mit einer Heizeinrichtung 8 beschleunigt werden, auf der das Becken 7 mit dem Ätzmittel sitzt.

Nach dem erfolgreichen Auftrennen der Stützstruktur 2 wird das Bauteil 1 in ein weiteres Becken 9 mit einem Neutralisationsmittel (beispielsweise Wasser) eingetaucht, um den Ätzvorgang zu stoppen. Dies ist in der mittleren Teilabbildung der Figur 3 schematisch dargestellt. In dieser Teilabbildung ist auch die lokale Auftrennung 10 der Stützstruktur 2 am Übergang zum Bauteil 1 angedeutet.

Die bei diesem Verfahren durch den Ätzvorgang auf der Bauteiloberfläche auftretenden Oxidschichten können in einem dritten Schritt, beispielsweise mittels eines Ultraschallbades 11, entfernt werden. Dazu wird das Bauteil 1 in diesem letzten dritten Schritt in das Ultraschallbad 11 eingetaucht, wie dies in der rechten Teilabbildung der Figur 3 schematisch dargestellt ist. Das Bauteil 1 besitzt nach der Anwendung des vorgeschlagenen Verfahrens eine Oberflächenqualität an der zuvor gestützten Oberfläche, die mindestens der Oberflächenqualität eines manuell bearbeiteten Bauteils entspricht.

Bezugszeichenliste

1    Bauteil
2    Stützstruktur
3    Überhangbereich des Bauteils
4    Soll-Trennstellen
5    Bauplattform
6    Haltevorrichtung
7    Becken mit Ätzmittel
8    Heizeinrichtung
9    Becken mit Neutralisationsmittel
10   Lokale Auftrennung der Stützstruktur
11   Ultraschallbad

**Patentansprüche**

1.   Verfahren zur werkzeuglosen Entfernung von Stützstrukturen bei der generativen Fertigung eines oder mehrerer Bauteile mittels Laserstrahlschmelzen oder Laser-Sintern,
bei dem die Bauteile (1) zusammen mit den Stützstrukturen (2) zur Stützung von Bereichen der Bauteile (1) schichtweise aufgebaut und die Stützstrukturen (2) nach einem vollständigen Aufbau der Bauteile (1) von den Bauteilen (1) entfernt werden,
wobei die Stützstrukturen (2) derart aufgebaut werden, dass sie an einem Übergang zu den Bauteilen (1) Soll-Trennstellen (4) aufweisen, wobei die Soll-Trennstellen (4) mit einer Struktur ausgebildet werden, die ein größeres Verhältnis von mit Ätzmittel benetzbarem Umfang zu zugehöriger Querschnittsfläche aufweist als die Bauteilkomponenten, so dass die Soll-Trennstellen (4) eine durch chemische oder elektrochemische Reaktion gegenüber Bauteilkomponenten schneller auflösbare Struktur aufweisen, und die Stützstrukturen (2) durch chemisches oder elektrochemisches Auflösen der Struktur an den Soll-Trennstellen (4) von den Bauteilen (1) abgetrennt werden,
**dadurch gekennzeichnet,**
**dass** die Stützstrukturen (2) so aufgebaut werden, dass sie sich beim Übergang zu den Bauteilen (1) baumartig verzweigen.

2.   Verfahren nach Anspruch 1,
**dadurch gekennzeichnet,**
**dass** die Soll-Trennstellen (4) mit einer Struktur ausgebildet werden, die ein größeres Verhältnis von mit Ätzmittel benetzbarem Umfang zu zugehöriger Querschnittsfläche aufweist als andere Teile der Stützstrukturen (2).

3.   Verfahren nach Anspruch 1 oder 2,
**dadurch gekennzeichnet,**
**dass** die Bauteile (1) mit den Stützstrukturen (2) nach dem vollständigen Aufbau der Bauteile (1) in ein chemisches oder elektrochemisches Ätzmittel eingetaucht werden, um die Struktur an den Soll-Trennstellen (4) durch einen Ätzprozess aufzulösen.

4.   Verfahren nach Anspruch 3,
**dadurch gekennzeichnet,**
**dass** der Ätzprozess nach dem Auflösen der Struktur an den Soll-Trennstellen (4) mit einem Neutralisationsmittel gestoppt wird.

5.   Verfahren nach Anspruch 3 oder 4,
**dadurch gekennzeichnet,**
**dass** sich durch den Ätzprozess auf den Bauteilen (1) bildende Oxidschichten mittels eines Ultraschallbades (11) entfernt werden.

6.   Verfahren nach einem der Ansprüche 3 bis 5,
**dadurch gekennzeichnet,**
**dass** die Bauteile (1) mit einem Aufmaß aufgebaut werden, das derart gewählt wird, dass die Bauteile (1) nach dem chemischen oder elektrochemischen Auflösen der Struktur an den Soll-Trennstellen (4) die gewünschten Maße aufweisen.

7.   Verfahren nach einem der Ansprüche 1 bis 6,
**dadurch gekennzeichnet,**
**dass** die Stützstrukturen (2) zumindest unterhalb von Bauteil-Überhängen (3) aufgebaut werden.

8.   Verfahren nach einem der Ansprüche 1 bis 7,
**dadurch gekennzeichnet,**
**dass** die Stützstrukturen (2) auf einer Substratplatte für den Aufbau der Bauteile (1) und/oder zwischen einzelnen Bereichen der Bauteile (1) aufgebaut werden.

**Claims**

1.   Method for the tool-free removal of support structures in the additive manufacturing of one or more components by means of laser beam melting or laser sintering in which the components (1) are built up in layers together with the support structures (2) for supporting regions of the components (1) and the support structures (2) are removed from the components (1) after the complete construction of the components (1),

wherein the support structures (2) are built up in such a manner that they have target separation points (4) at a transition to the components (1),

wherein the target separation points (4) are formed with a structure which has a larger ratio of circumference which can be wetted with etchant to appurtenant cross-sectional area than the component parts so that the target separation points (4) have a structure which can be broken down more rapidly by chemical or electrochemical reaction compared to component parts, and the support structures (2) are separated from the components (1) by chemical or electrochemical breakdown of the structure at the target separation points (4),

**characterized in that** the support structures (2) are built up so that they branch off in a tree-like manner at the transition to the components (1).

2. The method according to claim 1, **characterized in that** the target separation points (4) are formed with a structure which has a larger ratio of circumference which can be wetted with etchant to appurtenant cross-sectional area than other parts of the support structures (2).

3. The method according to claim 1 or 2, **characterized in that** after complete construction of the components (1), the components (1) with the support structures (2) are dipped in a chemical or electrochemical etchant in order to break down the structure at the target separation points (4) by an etching process.

4. The method according to claim 3, **characterized in that** after breakdown of the structure at the target separation points (4) the etching process is stopped with a neutralizing agent.

5. The method according to claim 3 or 4, **characterized in that** oxide layers forming on the components (1) due to the etching process are removed by means of an ultrasound bath (11).

6. The method according to one of claims 3 to 5, **characterized in that** the components (1) are built up with an oversize which is selected in such a manner that after the chemical or electrochemical breakdown of the structure at the target separation points (4) the components (1) have the desired dimensions.

7. The method according to one of claims 1 to 6, **characterized in that** the support structures (2) are built up at least below component overhangs (3).

8. The method according to one of claims 1 to 7, **characterized in that** the support structures (2) are built up on a substrate plate for building up the components (1) and/or between individual regions of the components (1).

**Revendications**

1. Procédé de retrait sans outil de structures de support dans le cadre de la fabrication générative d'un ou plusieurs composants au moyen d'une fusion par faisceau laser ou d'un frittage laser, dans lequel les composants (1) sont structurés conjointement aux structures de support (2) pour soutenir les zones des composants (1) constitués de couches et les structures de support (2) après un assemblage complet des composants (1) sont retirées des composants (1), dans lequel les structures de support (2) sont construites de manière à ce qu'elles présentent au niveau d'une transition vers les composants (1) des points de séparation cibles (4),

dans lequel les points de séparation cibles (4) sont formés avec une structure qui a un rapport plus élevé de la quantité mouillable avec l'agent d'attaque chimique à la surface de section transversale associée que celle des composants de sorte que les points de séparation cibles (4) présentent une structure qui peut être dissoute plus rapidement par réaction chimique ou électrochimique aux composants, et les structures de support (2) par dissolution chimique ou électrochimique de la structure au niveau des points de séparation cibles (4) sont séparés des composants (1), **caractérisé en ce que** les structures de support (2) sont structurées de telle sorte qu'elles s'embranchent en forme d'arbre au niveau de la transition vers les composants (1).

2. Procédé selon la revendication 1, **caractérisé en ce que** les points de séparation cibles (4) sont formés avec une structure qui a un rapport plus important de l'étendue mouillable avec l'agent d'attaque chimique par rapport à la zone de section transversale associée que d'autres parties des structures de support (2).

3. Procédé selon la revendication 1 ou 2, **caractérisé en ce que** les composants (1) avec les structures de support (2) après l'assemblage complet des composants (1) sont immergés dans un agent de gravure chimique ou électrochimique afin de dissoudre la structure aux points de séparation cibles (4) par un processus d'attaque chimique.

4. Procédé selon la revendication 3, **caractérisé en ce que** le processus de gravure est arrêté avec un agent neutralisant après dissolution de la structure aux points de séparation cibles (4).

**EP 3 528 982 B1**

5. Procédé selon la revendication 3 ou 4, **caractérisé en ce que** les couches d'oxyde formées par le processus de gravure sur les composants (1) sont éliminées au moyen d'un bain à ultrasons (11).

6. Procédé selon une des revendications 3 à 5, **caractérisé en ce que** les composants (1) sont constitués avec un surdimensionnement qui est choisi de telle sorte que les composants (1) après la dissolution chimique ou électrochimique de la structure aux points de séparation cibles (4) présentent les dimensions souhaitées.

7. Procédé selon une des revendications 1 à 6, **caractérisé en ce que** les structures de support (2) sont construites au moins en dessous du surplomb des composants (3).

8. Procédé selon une des revendications 1 à 7, **caractérisé en ce que** les structures de support (2) sont construites sur une plaque de substrat pour l'assemblage des composants (1) et/ou entre les zones individuelles des composants (1).

Fig. 1

1

4

Schnitt
A-A

A A

$U_{Stütz,benetzt}$ ◯

$A_{Stütz}$

2

**Fig. 2**

6

$F_G$ ↓

5

5

5

2

2

2

5

10

1

1

7

9

11    1

8

9    1

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19649865 C1
- EP 0655317 A1
- US 2015197862 A1